# EUROPEAN PATENT APPLICATION

(11) **EP 4 349 472 A1**
(43) Date of publication of application: **10.04.2024**
(21) Application number: 22937279.2
(22) Date of filing: 15.12.2022
(51) Int. Cl.: B01F 35/45, B01J 19/20, B01J 4/00, B01J 19/00, B01F 27/1145

(54) **PVA CURING MACHINE**

(30) Priority: 14.04.2022 CN 202210393528
(71) Applicant: Tianhua Institute Of Chemical Machinery & Automation Co., Ltd, Lanzhou, Gansu 730060 (CN); Tianhua Institute (Nanjing) Intelligent Manufacturing Co., Ltd, Nanjing, Jiangsu 211178 (CN)
(72) Inventor: DOU, Yan, Lanzhou, Gansu 730060 (CN); ZHAO, Xu, Lanzhou, Gansu 730060 (CN); LI, Peng, Lanzhou, Gansu 730060 (CN); MA, Yaohong, Nanjing, Jiangsu 211178 (CN); YANG, Shaohua, Lanzhou, Gansu 730060 (CN); HAN, Dongzhao, Lanzhou, Gansu 730060 (CN); LEI, Menglong, Lanzhou, Gansu 730060 (CN); XIE, Xiaoling, Lanzhou, Gansu 730060 (CN); LUO, Jian, Lanzhou, Gansu 730060 (CN)
(74) Representative: Murgitroyd & Company
(86) International application number: PCT/CN2022/139163
(87) International publication number: WO 2023/197650

(57) **Abstract**

The present disclosure relates to the field of curing equipment, and discloses a polyvinyl alcohol (PVA) curing machine, including a thermally conductive housing provided with material inlets configured to add additives, where a material outlet is provided in one end of the thermally conductive housing; and a heat tracing mechanism arranged on the thermally conductive housing and configured to heat the thermally conductive housing and heat materials through the thermally conductive housing. By arranging the heat tracing mechanism, the curing machine provided by the present disclosure can effectively control a temperature of an alcoholysis reaction; by providing the plurality of material inlets, different additives can be added according to actual market requirements, such that a molar ratio of alkali added in alcoholysis, a concentration of a vinyl acetate methanol solution, and water content are adjustable; and thus, preparation of polyvinyl alcohol products with different specifications can be implemented by reprocessing a polyvinyl alcohol product prepared by an existing alcoholysis apparatus with the PVA curing machine provided by the present disclosure. Therefore, preparation of polyvinyl alcohol products with various specifications can be implemented by arranging the PVA curing machine provided by the present disclosure.

## Description

### FIELD OF TECHNOLOGY

The present disclosure relates to the field of curing equipment, in particular to a PVA curing machine.

### BACKGROUND

Polyvinyl alcohol is called PVA for short. Because "vinyl alcohol" is easily isomerized into acetaldehyde, polyvinyl alcohol cannot be prepared through polymerization of a theoretical monomer "vinyl alcohol" and can only be prepared through an alcoholysis or hydrolysis reaction of polyvinyl acetate. However, polyvinyl alcohol prepared through alcoholysis is easy to refine and has high purity, and a main product has good performance, so the alcoholysis is usually used to prepare the polyvinyl alcohol in industry.

At present, a process for preparing polyvinyl alcohol through alcoholysis is limited by structural characteristics of an alcoholysis apparatus such as a belt alcoholysis machine and a crusher. In order to ensure that the production process can be carried out smoothly and the degree of alcoholysis and the degree of polymerization as important indexes of product performance are relatively stable, the temperature of an alcoholysis reaction, the molar ratio of alkali added in the alcoholysis, the concentration of a vinyl acetate methanol solution, and water content can only be adjusted to corresponding specified values. This leads to the fact that the current alcoholysis apparatus can only prepare one specification of polyvinyl alcohol, which has no any novelty in the consumer market and lacks competitiveness. Therefore, how to prepare polyvinyl alcohol with various specifications has become an urgent problem to be solved by those skilled in the art.

### SUMMARY

To solve the above technical problem, the present disclosure provides a PVA curing machine. Preparation of polyvinyl alcohol products with different specifications can be implemented by reprocessing a polyvinyl alcohol product prepared by an existing alcoholysis apparatus with the PVA curing machine provided by the present disclosure.

To achieve the above objective, the present disclosure provides the following solution:

The present disclosure provides a PVA curing machine, including: a thermally conductive housing provided with a plurality of material inlets configured to add additives, where a material outlet is provided in one end of the thermally conductive housing; stirring and conveying mechanisms, where each of the stirring and conveying mechanisms includes a rotating shaft and a spiral blade spirally arranged on the rotating shaft along a length direction of the rotating shaft, two ends of the rotating shaft penetrate through two ends of the thermally conductive housing respectively to extend out, and the spiral blade is configured to stir materials arranged inside the thermally conductive housing and convey the materials to the material outlet;
supports arranged at the two ends of the rotating shaft respectively, where the two ends of the rotating shaft are rotatably supported on the two supports respectively; power apparatuses connected to the rotating shafts to drive the rotating shafts to rotate; and a heat tracing mechanism arranged on the thermally conductive housing and configured to heat the thermally conductive housing and heat the materials through the thermally conductive housing.

Preferably, the material outlet is provided with an overflow baffle.

Preferably, the PVA curing machine further includes a discharging mechanism, where the discharging mechanism includes a discharging plate and a connecting rod, a discharging hole is provided in the overflow baffle, the connecting rod is connected to the discharging plate, and the discharging plate is configured to open or block the discharging hole.

Preferably, the PVA curing machine further includes a handle, a positioning sleeve, and a clamping sleeve, where the connecting rod has one end connected to the discharging plate and the other end penetrating through the thermally conductive housing to extend out, the clamping sleeve is sleeved on the connecting rod and fixed to the thermally conductive housing, one end of the positioning sleeve penetrates through the clamping sleeve and is positioned through a limit structure, the handle is sleeved outside the other end of the positioning sleeve and fixedly connected to the positioning sleeve, and the other end of the connecting rod penetrates through the positioning sleeve and is in threaded connection with the positioning sleeve.

Preferably, the PVA curing machine further includes two seal assemblies symmetrically arranged at two ends of the thermally conductive housing, where openings for the rotating shafts to penetrate through are provided in the two ends of the thermally conductive housing, the two seal assemblies are in one-to-one correspondence with the two openings, and the seal assemblies are configured to seal gaps between side walls of the corresponding openings and the rotating shafts.

Preferably, each of the seal assemblies includes: a first seal sleeve arranged in the corresponding opening, where the rotating shaft penetrates through the first seal sleeve, two seal tooth assemblies are arranged on an inner circumferential wall of the first seal sleeve along an axial direction of the first seal sleeve, each of the seal tooth assemblies includes a plurality of annular teeth arranged side by side along the axial direction of the first seal sleeve, a labyrinth cavity is formed between any adjacent two of the annular teeth, an interior of the first seal sleeve communicates with the discharging hole, and a position of the first seal sleeve that communicates with the discharging hole is located between the two seal tooth assemblies; a second seal sleeve arranged at one end, away from the thermally conductive housing, of the first seal sleeve and connected to the first seal sleeve, where the second seal sleeve is sleeved on the rotating shaft, a packing seal cavity is provided in an inner circumferential wall of the second seal sleeve, a plurality of packing seal rings are arranged side by side in the packing seal cavity along an axial direction of the second seal sleeve, each of the packing seal rings is sleeved on the rotating shaft, a seal groove is further provided in an inner circumferential wall of one end of the second seal sleeve that is close to the first seal sleeve, and a lip-shaped seal ring is arranged in the seal groove; and distribution hole rings, where each of the distribution hole rings is arranged between adjacent two of the plurality of packing seal rings, the distribution hole rings are sleeved on the rotating shaft, a plurality of air inlets are provided in a circumferential side wall of the distribution hole ring, a plurality of first air outlets arranged along a circumferential direction of the distribution hole ring and a plurality of second air outlets arranged along the circumferential direction of the distribution hole ring are provided in two ends of the distribution hole ring respectively, the air inlets are in one-to-one correspondence with the first air outlets and the second air outlets and communicate with an inert gas, and the air inlets communicate with the corresponding first and second air outlets.

Preferably, the heat tracing mechanism is a heat tracing jacket in which a heat exchange medium is arranged.

Preferably, each of the stirring and conveying mechanisms further includes stirring rakes arranged sequentially along an axial direction of the rotating shaft, where each of the stirring rakes includes a plurality of stirring blades uniformly arranged along a circumferential direction of the rotating shaft, and each of the stirring blades is fixedly connected to the rotating shaft.

Preferably, the rotating shaft includes a driving shaft and a driven shaft arranged coaxially, where one end of the driving shaft and one end of the driven shaft are in transmission connection, and the other end of the driving shaft and the other end of the driven shaft penetrate through the two ends of the thermally conductive housing respectively to extend out and are rotatably supported on the two supports respectively; and there are two power apparatuses and two stirring and conveying mechanisms, the two stirring and conveying mechanisms are arranged side by side, and the two power apparatuses are configured to drive the two rotating shafts to rotate.

Preferably, each of the power apparatuses includes a motor, a speed reducer, and a manual transmission which are in transmission connection sequentially, where an output end of the manual transmission is in transmission connection with the rotating shaft.

Compared with the prior art, the present disclosure has the following beneficial effects:
A PVA curing machine provided by the present disclosure includes: a thermally conductive housing provided with material inlets configured to add additives, where a material outlet is provided in one end of the thermally conductive housing; stirring and conveying mechanisms, where each of the stirring and conveying mechanisms includes a rotating shaft and a spiral blade spirally arranged on the rotating shaft along a length direction of the rotating shaft, two ends of the rotating shaft penetrate through two ends of the thermally conductive housing respectively to extend out, and the spiral blade is configured to stir materials arranged inside the thermally conductive housing and convey the materials to the material outlet; supports arranged at the two ends of the rotating shaft respectively, where the two ends of the rotating shaft are rotatably supported on the two supports respectively; power apparatuses connected to the rotating shafts to drive the rotating shafts to rotate; and a heat tracing mechanism arranged on the thermally conductive housing and configured to heat the thermally conductive housing and heat the materials through the thermally conductive housing.

An existing alcoholysis apparatus includes a belt alcoholysis machine, a crusher, and a centrifugal dehydrator, where the belt alcoholysis machine and the crusher are configured to complete processing of a polyvinyl alcohol product with a fixed specification, and the centrifugal dehydrator is configured to dehydrate and dry the processed polyvinyl alcohol product. During specific use, the PVA curing machine provided by the present disclosure is arranged behind the crusher and before the centrifugal dehydrator, and the polyvinyl alcohol product processed by the belt alcoholysis machine and the crusher is conveyed to the curing machine provided by the present disclosure, re-alcoholized by the curing machine provided by the present disclosure, and then conveyed to the centrifugal dehydrator for dehydration and drying. By providing the plurality of material inlets, different additives can be added into the thermally conductive housing of the PVA curing machine provided by the present disclosure according to actual market requirements, such that a molar ratio of alkali added in alcoholysis, a concentration of a vinyl acetate methanol solution, and water content are adjustable; by arranging the heat tracing mechanism, a temperature of an alcoholysis reaction can be adjusted; and thus, preparation of polyvinyl alcohol products with various specifications can be implemented by virtue of the PVA curing machine provided by the present disclosure.

### BRIEF DESCRIPTION OF THE DRAWINGS

To more clearly illustrate the technical solutions in the embodiments of the present disclosure or in the prior art, the accompanying drawings that need to be used in the embodiments will be briefly described below. Apparently, the accompanying drawings in the description below merely illustrate some embodiments of the present disclosure. Those of ordinary skill in the art may also derive other accompanying drawings from these accompanying drawings without creative efforts.
FIG. 1 is a front view of a PVA curing machine provided in an embodiment of the present disclosure;
FIG. 2 is a schematic diagram of an internal structure of a PVA curing machine provided in an embodiment of the present disclosure;
FIG. 3 is a schematic diagram of a structure of a discharging mechanism of a PVA curing machine provided in an embodiment of the present disclosure;
FIG. 4 is a schematic diagram of a structure of a seal assembly of a PVA curing machine provided in an embodiment of the present disclosure; and
FIG. 5 is a schematic diagram of a structure of a stirring and conveying mechanism of a PVA curing machine provided in an embodiment of the present disclosure.

### Description of reference numerals:

100. PVA curing machine; 1. thermally conductive housing; 101. material inlet; 2. rotating shaft; 201. driving shaft; 202. driven shaft; 203. short connecting shaft; 3. spiral blade; 4. stirring rake; 5. support; 6. power apparatus; 7. heat tracing mechanism; 8. overflow baffle; 9. discharging mechanism; 901. discharging plate; 902. connecting rod; 903. handle; 10. positioning sleeve; 11. clamping sleeve; 12. first seal sleeve; 1201. annular tooth; 13. flow guide tube; 14. second seal sleeve; 15. packing seal ring; 16. distribution hole ring; 17. hanging bracket; 18. discharging tube; 19. lip-shaped seal ring; 20. press cover; and 21. third seal sleeve.

### DESCRIPTION OF THE EMBODIMENTS

An objective of the present disclosure is to provide a curing machine capable of implementing preparation of polyvinyl alcohol products with various specifications.

To make the above objective, features and advantages of the present disclosure more obvious and understandable, the present disclosure is further described in detail below with reference to the accompanying drawings and specific implementations.

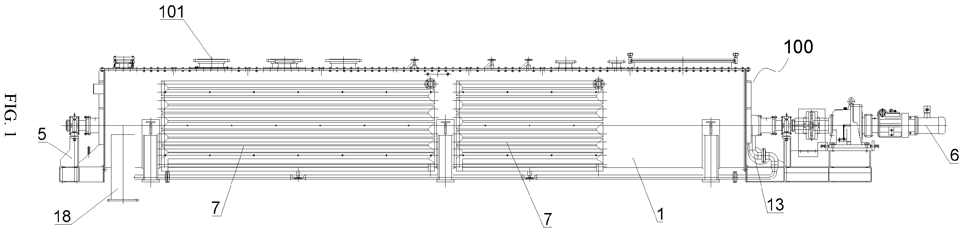

Referring to FIG. 1 to FIG. 5, a PVA curing machine 100 provided by this embodiment includes: a thermally conductive housing 1 provided with material inlets 101 configured to add additives, where a material outlet is provided in one end of the thermally conductive housing 1; stirring and conveying mechanisms, where each of the stirring and conveying mechanisms includes a rotating shaft 2 and a spiral blade 3 spirally arranged on the rotating shaft 2 along a length direction of the rotating shaft 2, two ends of the rotating shaft 2 penetrate through two ends of the thermally conductive housing 1 respectively to extend out, and the spiral blade 3 is configured to stir materials arranged inside the thermally conductive housing 1 and convey the materials to the material outlet; supports 5 arranged at the two ends of the rotating shaft 2 respectively, where the two ends of the rotating shaft 2 are rotatably supported on the two supports 5 respectively; power apparatuses 6 connected to the rotating shafts 2 to drive the rotating shafts 2 to rotate; and a heat tracing mechanism 7 arranged on the thermally conductive housing 1 and configured to heat the thermally conductive housing 1 and heat the materials through the thermally conductive housing 1.

An existing alcoholysis apparatus includes a belt alcoholysis machine, a crusher, and a centrifugal dehydrator, where the belt alcoholysis machine and the crusher are configured to complete processing of a polyvinyl alcohol product with a fixed specification, and the centrifugal dehydrator is configured to dehydrate and dry the processed polyvinyl alcohol product. During specific use, the PVA curing machine 100 provided by the present disclosure is arranged behind the crusher and before the centrifugal dehydrator, and the polyvinyl alcohol product processed by the belt alcoholysis machine and the crusher is conveyed to the curing machine provided by the present disclosure, re-alcoholized by the curing machine provided by the present disclosure, and then conveyed to the centrifugal dehydrator for dehydration and drying. By providing the plurality of material inlets 101, different additives can be added into the thermally conductive housing 1 of the PVA curing machine 100 provided by the present disclosure according to actual market requirements, such that a molar ratio of alkali added in alcoholysis, a concentration of a vinyl acetate methanol solution, and water content are adjustable; by arranging the heat tracing mechanism 7, a temperature of an alcoholysis reaction can be adjusted; and thus, preparation of polyvinyl alcohol products with various specifications can be implemented by virtue of the PVA curing machine 100 provided by the present disclosure.

In this embodiment, the additives specifically include acetic acid, methanol, the alkali participating in the alcoholysis reaction, and water. Further, the thermally conductive housing 1 is provided with four material inlets 101 configured to add the acetic acid, the methanol, the alkali participating in the alcoholysis reaction, and the water, respectively. It should be noted that the number of material inlets 101 is not only limited to four and may be others. In addition, a plurality of additives may share one material inlet 101 by which they are added into the thermally conductive housing 1.

Further, the material inlets 101 are provided in a top end of the thermally conductive housing 1, and the material outlet communicates with a discharging tube 18.

Further, the thermally conductive housing 1 is further provided with an observation hole, a light irradiation hole, a pressure measuring hole, and a temperature measuring hole.

In this embodiment, in order to make the materials fully react with the additives, the material outlet is provided with an overflow baffle 8, such that the materials start to be discharged only when filled in a housing body to a position of the overflow baffle.

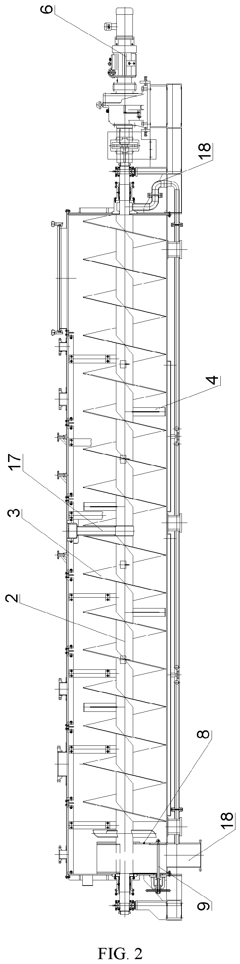

In this embodiment, as shown in FIG. 2 to FIG. 3, the PVA curing machine 100 further includes a discharging mechanism 9, where the discharging mechanism 9 includes a discharging plate 901 and a connecting rod 902, a discharging hole is provided in the overflow baffle 8, the connecting rod 902 is connected to the discharging plate 901, and the discharging plate 901 is configured to open or block the discharging hole. During specific use, the residual materials in the thermally conductive housing 1 are discharged by the discharging plate 901.

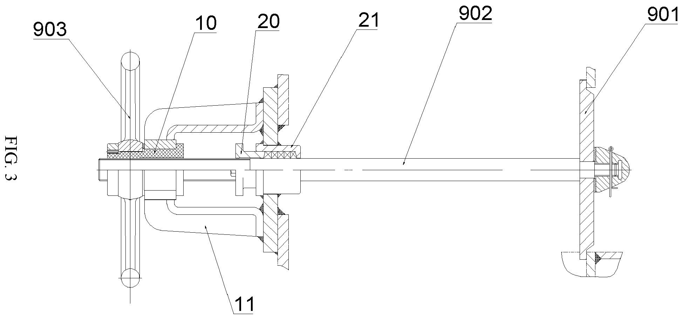

In this embodiment, as shown in FIG. 3, the PVA curing machine 100 further includes a handle 903, a positioning sleeve 10, and a clamping sleeve 11, where the connecting rod 902 has one end connected to the discharging plate 901 and the other end penetrating through the thermally conductive housing 1 to extend out, the clamping sleeve 11 is sleeved on the connecting rod 902 and fixed to the thermally conductive housing 1, one end of the positioning sleeve 10 penetrates through the clamping sleeve 11 and is positioned through a limit structure, the handle 903 is sleeved outside the other end of the positioning sleeve 10 and fixedly connected to the positioning sleeve 10, and the other end of the connecting rod 902 penetrates through the positioning sleeve 10 and is in threaded connection with the positioning sleeve 10. During specific use, the handle 903 is rotated forwards and reversely, the connecting rod 902 drives the discharging plate 901 to move in a direction away from or close to the discharging hole, so as to open or close the discharging hole.

Further, the limit structure is specifically a limit flange, the clamping sleeve 11 abuts against the limit flange, and two ends of the positioning sleeve 10 are positioned by the handle 903 and the limit flange, respectively.

In this embodiment, the PVA curing machine 100 further includes two seal assemblies symmetrically arranged at two ends of the thermally conductive housing 1, where openings for the rotating shafts 2 to penetrate through are provided in the two ends of the thermally conductive housing 1, the two seal assemblies are in one-to-one correspondence with the two openings, and the seal assemblies are configured to seal gaps between side walls of the corresponding openings and the rotating shafts 2.

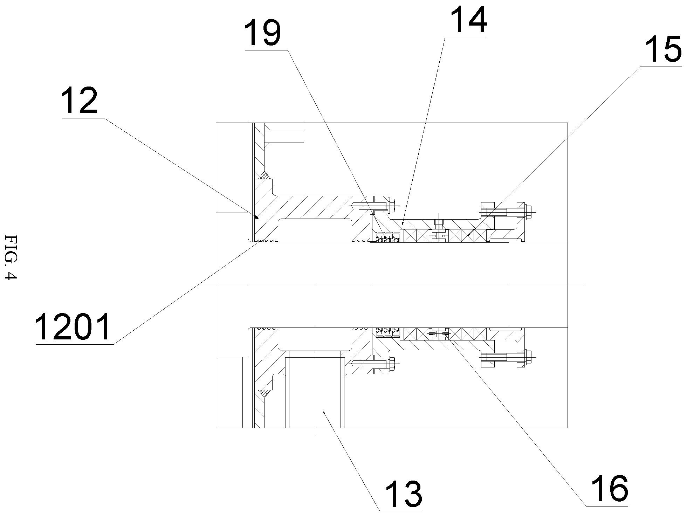

In this embodiment, as shown in FIG. 4, each of the seal assemblies includes: a first seal sleeve 12 arranged in the corresponding opening, where the rotating shaft 2 penetrates through the first seal sleeve 12, two seal tooth assemblies are arranged on an inner circumferential wall of the first seal sleeve 12 along an axial direction of the first seal sleeve 12, each of the seal tooth assemblies includes a plurality of annular teeth 1201 arranged side by side along the axial direction of the first seal sleeve 12, a labyrinth cavity is formed between any adjacent two of the annular teeth 1201, an interior of the first seal sleeve 12 communicates with the discharging hole, and a position of the first seal sleeve 12 that communicates with the discharging hole is located between the two seal tooth assemblies; a second seal sleeve 14 arranged at one end, away from the thermally conductive housing 1, of the first seal sleeve 12 and connected to the first seal sleeve 12, where the second seal sleeve 14 is sleeved on the rotating shaft 2, a packing seal cavity is provided in an inner circumferential wall of the second seal sleeve 14, a plurality of packing seal rings 15 are arranged side by side in the packing seal cavity along an axial direction of the second seal sleeve 14, each of the packing seal rings 15 is sleeved on the rotating shaft 2, a seal groove is further provided in an inner circumferential wall of one end of the second seal sleeve 14 that is close to the first seal sleeve 12, and a lip-shaped seal ring 19 is arranged in the seal groove; and distribution hole rings 16, where each of the distribution hole rings 16 is arranged between adjacent two of the plurality of packing seal rings 15, the distribution hole rings 16 are sleeved on the rotating shaft 2, a plurality of air inlets are provided in a circumferential side wall of the distribution hole ring 16, a plurality of first air outlets arranged along a circumferential direction of the distribution hole ring 16 and a plurality of second air outlets arranged along the circumferential direction of the distribution hole ring 16 are provided in two ends of the distribution hole ring 16 respectively, the air inlets are in one-to-one correspondence with the first air outlets and the second air outlets and communicate with an inert gas, and the air inlets communicate with the corresponding first and second air outlets.

Further, nitrogen is specifically selected as the inert gas. The first seal sleeve 12 communicates with the discharging hole through a flow guide tube 13, and a position of the first seal sleeve 12 that communicates with the flow guide tube 13 is located between the two seal tooth assemblies.

During specific use, after sealing by the first seal sleeve 12, the liquid-phase and solid-phase leaked materials are guided to the discharging hole through the flow guide tube 13 to gather, and the gas-phase leaked materials are sealed again by the lip-shaped seal rings 19, the packing seal rings 15, and the distribution hole rings 16. By arranging the seal assemblies, the sealing effect of the PVA curing machine 100 provided in this embodiment is greatly improved.

Further, the thermally conductive housing 1 is provided with a third seal sleeve 21, the connecting rod 902 penetrates through the third seal sleeve 21, and a sealing filler is provided between the third seal sleeve 21 and the connecting rod 902 to seal a gap between the third seal sleeve 21 and the connecting rod 902. In addition, one end of the third seal sleeve 21 is closed, the other end of the third seal sleeve is provided with a placement hole and a press cover 20 configured to open or close the placement hole, and the sealing filler is placed between the third seal sleeve 21 and the connecting rod 902 from the placement hole.

In this embodiment, the heat tracing mechanism 7 is a heat tracing jacket in which a heat exchange medium is arranged.

Further, the heat tracing jacket is of a tubular structure. But it is not only limited to the tubular structure and may also be of a honeycomb structure. In addition, a plurality of heat tracing mechanisms 7 may be arranged along a length direction of the thermally conductive housing 1 according to requirements, and the temperatures of the plurality of heat tracing mechanisms 7 may be same or different depending on actual requirements.

Further, the heat exchange medium is water, but it is not only limited to the water and may be other media that can implement heat exchange.

In this embodiment, in order to mix the materials with the additives more fully, each of the stirring and conveying mechanisms further includes stirring rakes 4 arranged sequentially along an axial direction of the rotating shaft 2, where each of the stirring rakes 4 includes a plurality of stirring blades uniformly arranged along a circumferential direction of the rotating shaft 2, and each of the stirring blades is fixedly connected to the rotating shaft 2.

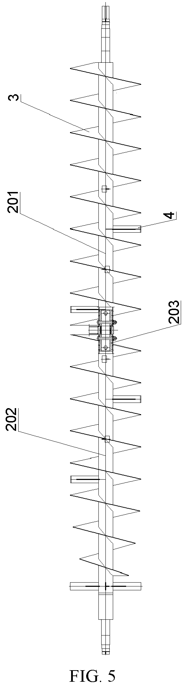

In this embodiment, as shown in FIG. 5, the rotating shaft 2 includes a driving shaft 201 and a driven shaft 202 arranged coaxially, where one end of the driving shaft 201 and one end of the driven shaft 202 are in transmission connection, and the other end of the driving shaft 201 and the other end of the driven shaft 202 penetrate through the two ends of the thermally conductive housing 1 respectively to extend out and are rotatably supported on the two supports 5 respectively.

Further, two opposite ends of the driving shaft 201 and the driven shaft 202 are provided with a first mounting hole and a second mounting hole respectively, and two ends of a short connecting shaft 203 are embedded into the first mounting hole and the second mounting hole respectively and are connected to the driving shaft 201 and the driven shaft 202 through a first bolt and a second bolt respectively.

Further, the short connecting shaft 203 is connected to an inner wall of the thermally conductive housing 1 through a hanging bracket 17. A hanging sliding bearing is mounted on the short connecting shaft 203 and in a hanging bearing seat, and the hanging bearing seat is fixed to the housing body through the hanging bracket 17.

In this embodiment, there are two power apparatuses 6 and two stirring and conveying mechanisms, the two stirring and conveying mechanisms are arranged side by side, and the two power apparatuses 6 are configured to drive the two rotating shafts 2 to rotate. The materials can be mixed with the additives more fully by arranging the two stirring and conveying mechanisms.

In this embodiment, each of the power apparatuses 6 includes a motor, a speed reducer, and a manual transmission which are in transmission connection sequentially, where an output end of the manual transmission is in transmission connection with the rotating shaft 2. During specific use, a rotational speed of the rotating shaft 2 is adjusted by the manual transmission.

Herein, the principle and implementation of the preset disclosure are illustrated with specific examples. The description of the above embodiment is only used to help understand the method and core idea of the present disclosure; and meanwhile, those of ordinary skill in the art will make changes in specific implementation and scope of application according to the idea of the present disclosure. In summary, the content of this specification should not be construed as limiting the present disclosure.

## Claims

1. A polyvinyl alcohol (PVA) curing machine, comprising:
a thermally conductive housing provided with material inlets configured to add additives, wherein a material outlet is provided in one end of the thermally conductive housing;
stirring and conveying mechanisms, wherein each of the stirring and conveying mechanisms comprises a rotating shaft and a spiral blade spirally arranged on the rotating shaft along a length direction of the rotating shaft, two ends of the rotating shaft penetrate through two ends of the thermally conductive housing respectively to extend out, and the spiral blade is configured to stir materials arranged inside the thermally conductive housing and convey the materials to the material outlet;
supports arranged at the two ends of the rotating shaft respectively, wherein the two ends of the rotating shaft are rotatably supported on the two supports respectively;
power apparatuses connected to the rotating shafts to drive the rotating shafts to rotate; and
a heat tracing mechanism arranged on the thermally conductive housing and configured to heat the thermally conductive housing and heat the materials through the thermally conductive housing.

2. The PVA curing machine according to claim 1, wherein the material outlet is provided with an overflow baffle.

3. The PVA curing machine according to claim 2, further comprising a discharging mechanism, wherein the discharging mechanism comprises a discharging plate and a connecting rod, a discharging hole is provided in the overflow baffle, the connecting rod is connected to the discharging plate, and the discharging plate is configured to open or block the discharging hole.

4. The PVA curing machine according to claim 3, further comprising a handle, a positioning sleeve, and a clamping sleeve, wherein the connecting rod has one end connected to the discharging plate and the other end penetrating through the thermally conductive housing to extend out, the clamping sleeve is sleeved on the connecting rod and fixed to the thermally conductive housing, one end of the positioning sleeve penetrates through the clamping sleeve and is positioned through a limit structure, the handle is sleeved outside the other end of the positioning sleeve and fixedly connected to the positioning sleeve, and the other end of the connecting rod penetrates through the positioning sleeve and is in threaded connection with the positioning sleeve.

5. The PVA curing machine according to claim 1, further comprising two seal assemblies symmetrically arranged at two ends of the thermally conductive housing, wherein openings for the rotating shafts to penetrate through are provided in the two ends of the thermally conductive housing, the two seal assemblies are in one-to-one correspondence with the two openings, and the seal assemblies are configured to seal gaps between side walls of the corresponding openings and the rotating shafts.

6. The PVA curing machine according to claim 5, wherein each of the seal assemblies comprises:
a first seal sleeve arranged in the corresponding opening, wherein the rotating shaft penetrates through the first seal sleeve, two seal tooth assemblies are arranged on an inner circumferential wall of the first seal sleeve along an axial direction of the first seal sleeve, each of the seal tooth assemblies comprises a plurality of annular teeth arranged side by side along the axial direction of the first seal sleeve, a labyrinth cavity is formed between any adjacent two of the annular teeth, an interior of the first seal sleeve communicates with the discharging hole, and a position of the first seal sleeve that communicates with the discharging hole is located between the two seal tooth assemblies;
a second seal sleeve arranged at one end, away from the thermally conductive housing, of the first seal sleeve and connected to the first seal sleeve, wherein the second seal sleeve is sleeved on the rotating shaft, a packing seal cavity is provided in an inner circumferential wall of the second seal sleeve, a plurality of packing seal rings are arranged side by side in the packing seal cavity along an axial direction of the second seal sleeve, each of the packing seal rings is sleeved on the rotating shaft, a seal groove is further provided in an inner circumferential wall of one end of the second seal sleeve that is close to the first seal sleeve, and a lip-shaped seal ring is arranged in the seal groove; and
distribution hole rings, wherein each of the distribution hole rings is arranged between adjacent two of the plurality of packing seal rings, the distribution hole rings are sleeved on the rotating shaft, a plurality of air inlets are provided in a circumferential side wall of the distribution hole ring, a plurality of first air outlets arranged along a circumferential direction of the distribution hole ring and a plurality of second air outlets arranged along the circumferential direction of the distribution hole ring are provided in two ends of the distribution hole ring respectively, the air inlets are in one-to-one correspondence with the first air outlets and the second air outlets and communicate with an inert gas, and the air inlets communicate with the corresponding first and second air outlets.

7. The PVA curing machine according to claim 1, wherein the heat tracing mechanism is a heat tracing jacket in which a heat exchange medium is arranged.

8. The PVA curing machine according to claim 1, wherein each of the stirring and conveying mechanisms further comprises stirring rakes arranged sequentially along an axial direction of the rotating shaft, each of the stirring rakes comprises a plurality of stirring blades uniformly arranged along a circumferential direction of the rotating shaft, and each of the stirring blades is fixedly connected to the rotating shaft.

9. The PVA curing machine according to claim 1, wherein the rotating shaft comprises a driving shaft and a driven shaft arranged coaxially, one end of the driving shaft and one end of the driven shaft are in transmission connection, and the other end of the driving shaft and the other end of the driven shaft penetrate through the two ends of the thermally conductive housing respectively to extend out and are rotatably supported on the two supports respectively; and there are two power apparatuses and two stirring and conveying mechanisms, the two stirring and conveying mechanisms are arranged side by side, and the two power apparatuses are configured to drive the two rotating shafts to rotate.

10. The PVA curing machine according to claim 1, wherein each of the power apparatuses comprises a motor, a speed reducer, and a manual transmission which are in transmission connection sequentially, and an output end of the manual transmission is in transmission connection with the rotating shaft.
